# EUROPÄISCHE PATENTSCHRIFT

(11) **EP 3 059 187 B1**
(45) Veröffentlichungstag und Bekanntmachung des Hinweises auf die Patenterteilung: **22.02.2023**
(21) Anmeldenummer: 15200880.1
(22) Anmeldetag: 17.12.2015
(51) Int. Cl.: B65G 27/32, G01H 11/08, G01H 1/00, G01H 3/04, G01H 3/10, H02K 35/02

(54) **SENSOREINRICHTUNG ZUR BEREITSTELLUNG WENIGSTENS EINES BETRIEBSPARAMETERS EINES SCHWINGFÖRDERERS UND SCHWINGFÖRDERER**
SENSOR DEVICE FOR PROVIDING AT LEAST ONE OPERATING PARAMETER OF A VIBRATOR CONVEYOR AND VIBRATORY CONVEYOR
DISPOSITIF DE CAPTEUR DESTINE A PREPARER AU MOINS UN PARAMETRE DE FONCTIONNEMENT D'UN CONVOYEUR OSCILLANT ET CONVOYEUR OSCILLANT

(30) Priorität: 19.02.2015 DE 102015102384
(43) Veröffentlichungstag der Anmeldung: 24.08.2016
(73) Patentinhaber: Afag Holding AG, 6144 Zell (CH)
(72) Erfinder: BOTT, Klaus, 90518 Altdorf (DE); MESAN, Izudin, 90461 Nürnberg (DE); MOJRZISCH, Sebastian, 30449 Hannover (DE); TWIEFEL, Jens, 30159 Hannover (DE); WALLASCHECK, Jörg, 30161 Hannover (DE)
(74) Vertreter: Lindner Blaumeier Patent- und Rechtsanwälte

(56) Entgegenhaltungen:
- EP-A1- 1 201 572
- WO-A1-95/15221
- WO-A1-2012/122597
- WO-A2-2012/071198
- DE-A1- 3 644 811
- DE-A1- 4 142 398
- DE-A1- 19 531 674
- DE-A1-102012 217 510

## Beschreibung

Die Erfindung betrifft eine Sensoreinrichtung, die zur Bereitstellung wenigstens eines Betriebsparameters eines Schwingförderers an eine Steuereinrichtung dient, wobei die Steuereinrichtung zur Steuerung einer Antriebseinrichtung zur Anregung von Schwingungen einer Schwingschiene in Abhängigkeit des Betriebsparameters dient, wobei die Sensoreinrichtung wenigstens ein Sensorelement zur Erfassung des Betriebsparameters oder wenigstens eines Messwertes, aus dem der Betriebsparameter bestimmbar ist, umfasst. Daneben betrifft die Erfindung einen Schwingförderer.

Schwingförderer werden beispielsweise zum Zuführen kleiner Bauteile bzw. Bauteilkomponenten in automatisierten Fertigungsprozessen und zum Transport von Schüttgut eingesetzt. Eine Schwingschiene des Schwingförderers wird durch eine Antriebseinrichtung zu einer ellipsenartigen Schwingung bzw. Rüttelbewegung angeregt, die das zu fördernde Material entlang einer vordefinierten Bahn fördert. Die Schwingung der Schwingschiene kann angeregt werden, indem ein Elektromagnet derart angesteuert wird, dass er periodisch einen mit der Schwingschiene verbundenen Anker anzieht. Die Schwingschiene kann durch Blattfedern gelagert sein.

Um den Schwingförderer energieeffizient zu betreiben, das heißt bereits bei Nutzung von geringen Anregungsenergien große Schwingungsamplituden zu erreichen, ist es vorteilhaft, den Schwingförderer an oder nahe der Resonanzfrequenz der gefedert gelagerten Schwingschiene zu betreiben. Große Schwingungsamplituden sind vorteilhaft, da die Schwingamplitude im Zusammenhang mit der Förderleistung steht. Daneben soll eine konstante Schwingamplitude erreicht werden, da dies eine Voraussetzung für eine konstante Förderleistung ist.

Um eine große und stabile Schwingungsamplitude zu erreichen, ist es bekannt, Sensoren zu nutzen, die Betriebsparameter des Schwingförderers erfassen. So offenbart die Druckschrift DE 19 741 524 A1 einen Schwingförderer, der einen optischen Sensor umfasst, der die Schwingungsamplitude überwacht. In Abhängigkeit der erfassten Schwingungsamplitude erfolgt eine Regelung des Antriebs des Schwingförderers.

Die Druckschriften WO 2012/071198 sowie WO 2012/122597 beziehen sich auf eine Sensoreinrichtung, die zur Bereitstellung wenigstens eines Betriebsparameters eines Schwingförderers an eine Steuereinrichtung dient, wobei die Steuereinrichtung zur Steuerung einer Antriebseinrichtung zur Anregung von Schwingungen einer Schwingschiene in Abhängigkeit des Betriebsparameters dient, wobei die Sensoreinrichtung wenigstens ein Sensorelement zur Erfassung des Betriebsparameters oder wenigstens eines Messwertes, aus dem der Betriebsparameter bestimmbar ist, umfasst, wobei die Sensoreinrichtung wenigstens eine Kommunikationseinrichtung zur drahtlosen Übertragung des Betriebsparameters an die Steuereinrichtung und eine Energieversorgungseinrichtung zur Versorgung der Sensoreinrichtung mit Betriebsenergie umfasst, wobei die Energieversorgungseinrichtung zur Umsetzung einer durch die Antriebseinrichtung erzeugten Vibration und/oder elektromagnetischen Strahlung in die Betriebsenergie dient.

Die Druckschriften EP 1 201 572, DE 195 31 674, DE 41 42 398, DE 36 44 811 und WO 95/15221 betreffen alle eine Sensoreinrichtung, die zur Bereitstellung wenigstens eines Betriebsparameters eines Schwingförderers an eine Steuereinrichtung dient.

Die Druckschrift DE 10 2012 217 510 offenbart eine Sensoreinrichtung umfassend einen Beschleunigungssensor zur drahtlosen Übertragung an eine Steuereinrichtung und eine Energieversorgungseinrichtung zur Versorgung der Sensoreinrichtung mit Betriebsenergie, wobei die Energieversorgungseinrichtung zur Umsetzung einer durch die Antriebseinrichtung erzeugten Vibration dient, wobei die Sensoreinrichtung eine Verarbeitungseinrichtung zur Ermittlung der Messwerte umfasst, wobei die Verarbeitungseinrichtung ausgebildet ist, in vorgegebenen oder von dem Messwert abhängigen Abständen die Kommunikationseinrichtung zur Übertragung des jeweils ermittelten Betriebsparameters anzusteuern, wobei erfasste Daten als Betriebsparameter in vorgegebenen Zeitintervallen übertragen werden.

Problematisch ist hierbei, dass entsprechende Sensoren einerseits mit Energie versorgt werden müssen und andererseits die Signale der Sensoren zu der Antriebseinrichtung bzw. einer der Antriebseinrichtungen zugeordneten Steuereinrichtung geführt werden müssen. Insbesondere dann, wenn ein entsprechender Sensor mit der vibrierenden Schwingschiene verbunden sein soll, kann eine Verkabelung des Sensors aufwändig und fehleranfällig sein.

Der Erfindung liegt somit die Aufgabe zugrunde, eine dem gegenüber verbesserte Sensoreinrichtung anzugeben.

Die Aufgabe wird erfindungsgemäß gelöst, indem eine Sensoreinrichtung der eingangs genannten Art angegeben wird, die wenigstens eine Kommunikationseinrichtung zur drahtlosen Übertragung des Betriebsparameters an die Steuereinrichtung und eine Energieversorgungseinrichtung zur Versorgung der Sensoreinrichtung mit Betriebsenergie umfasst, wobei die Energieversorgungseinrichtung zur Umsetzung einer durch die Antriebseinrichtung erzeugten Vibration oder elektromagnetischen Strahlung in die Betriebsenergie dient.

Erfindungsgemäß wird eine Sensoreinrichtung vorgeschlagen, die in einem Schwingförderer ohne eine Verkabelung der Sensoreinrichtung zur Energieversorgung und zur Übertragung von Messwerten bzw. dem Betriebsparameter auskommt. Dies wird zum einen erreicht, indem die Übertragung des Betriebsparameters von der Sensoreinrichtung zu der Steuereinrichtung drahtlos erfolgt. Eine drahtlose Übertragung von Informationen benötigt jedoch eine gewisse Energie zum Senden der Informationen, so dass selbst bei einer Verwendung von rein passiven Sensoren eine Energieversorgung der Sensoreinrichtung erforderlich ist. Eine Energieversorgung könnte prinzipiell durch Batterien oder Akkumulatoren in der Sensoreinrichtung erreicht werden. In diesem Fall wäre jedoch ein regelmäßiges Nachladen der Akkumulatoren bzw. ein Batteriewechsel erforderlich, was insbesondere bei einer Nutzung von Schwingförderern mit einer Vielzahl der Sensoreinrichtungen den Wartungsaufwand erheblich erhöhen würde. Daher wird erfindungsgemäß vorgeschlagen, die Energie zum Betrieb der Sensoreinrichtung aus der durch die Antriebseinrichtung bereitgestellten Energie zu gewinnen, indem die erzeugten Vibrationen und/oder die elektromagnetische Strahlung, die durch die Antriebseinrichtung abgestrahlt wird, in die Betriebsenergie umgesetzt werden. Somit kann eine im Wesentlichen wartungsfreie drahtlose Sensoreinrichtung für Schwingförderer bereitgestellt werden.

Die erfindungsgemäße Sensoreinrichtung kann direkt an der Schwingschiene angeordnet sein. Beispielsweise kann die Sensoreinrichtung an der Unterseite oder im seitlichen Bereich der Schwingschiene angeordnet sein. Die Sensoreinrichtung kann durch eines oder mehrere Befestigungselemente an der Schwingschiene befestigt sein, beispielsweise durch Schrauben oder Klemmen.

Es ist möglich, dass die Energieversorgungseinrichtung ein Schwingelement, das bei einem mechanischen Kontakt der Sensoreinrichtung zu dem Schwingförderer durch Vibrationen in Schwingung versetzbar ist, und eine Gleichrichtschaltung umfasst, wobei bei einer Schwingung des Schwingelements eine Wechselspannung bereitgestellt wird, und wobei die Gleichrichtschaltung zur Bereitstellung der Betriebsenergie durch Gleichrichten der Wechselspannung dient. Vorteilhaft kann die Sensoreinrichtung im mechanischen Kontakt mit der Schwingschiene oder einem die Schwingschiene lagernden Lagerelement, beispielsweise einer Blattfeder, sein. In diesem Fall versetzen die Schwingungen der Schwingschiene bzw. des Lagerelements das Schwingelement in Schwingung. Das Schwingelement kann zugleich als Sensorelement dienen, insbesondere als Beschleunigungssensor. Vorteilhaft ist es jedoch separat von dem Sensorelement ausgebildet, da sich die technischen Anforderungen an das Schwingelement und an einen Beschleunigungssensor unterscheiden. So soll das Schwingelement einen möglichst hohen Wirkungsgrad der Energiegewinnung ermöglichen, bei einem Sensor ist jedoch eine hohe Genauigkeit der Messwerte erforderlich.

Die Gleichrichtschaltung kann als Voll- oder Halbbrücke ausgebildet sein. Es ist möglich, eine passive Gleichrichtschaltung, die beispielsweise aus Dioden aufgebaut ist, zu nutzen. Alternativ oder ergänzend können getaktet geschaltete elektrische Schalter, beispielsweise Transistoren, genutzt werden. Es ist möglich, dass die gleichgerichtete Spannung geglättet wird, beispielsweise durch einen Kondensator. Es kann eine Energiespeichereinrichtung zum Zwischenspeichern der Betriebsenergie vorgesehen sein, beispielsweise eine Batterie, ein Goldcap oder ein Superkondensator. Diese Energiespeichereinrichtung kann kleindimensioniert sein, da sie nur zur Stabilisierung der Energieversorgung der Sensoreinrichtung dient und die Sensoreinrichtung nicht dauerhaft mit Energie versorgen muss.

Das Schwingelement kann ein Piezoelement sein oder wenigstens ein Piezoelement umfassen, wobei bei einer Schwingung des Schwingelements das Piezoelemente verformt wird. Das Piezoelement kann bei der Schwingung beispielsweise gestaucht, gedehnt, oder in Biegeschwingungen versetzt werden. Bei einer Verformung des Piezoelements durch die Schwingung kann die Wechselspannung direkt am Piezoelement abgegriffen und anschließend gleichgerichtet werden.

Es ist möglich, dass das Piezoelement eine zumindest in einer Richtung bezüglich der Sensoreinrichtung bewegliche Gegenmasse mit einem bezüglich der Sensoreinrichtung ortsfesten Befestigungspunkt koppelt. Beispielsweise kann das Schwingelement entsprechend einem piezoelementbasierten Beschleunigungssensor aufgebaut sein, bei dem in Abhängigkeit einer auf den Beschleunigungssensor wirkenden Beschleunigung eine Spannung ausgegeben wird. Im Gegensatz zu Beschleunigungssensoren, die soweit sie piezobasiert sind, typischerweise Piezoeinkristalle nutzen, um eine hohe Genauigkeit zu erreichen, wird für das Piezoelement des Schwingelements vorzugsweise ein polykristallines Piezoelement genutzt, womit ein höherer Wirkungsgrad erreicht werden kann. Das Schwingelement kann insbesondere ein Biegewandler sein. Ein Biegewandler kann als das Element, welches bei der Schwingung gebogen wird, vorzugsweise ein Element aus einem Mehrschichtmaterial umfassen, wobei wenigstens eine der Schichten eine Schicht aus einer Piezokeramik ist. Es kann sich bei dem Element um ein Monomorph handeln, bei dem eine Piezokeramik auf ein Trägermaterial aufgetragen ist oder einen Bimorph mit zwei Piezoschichten, die bei einer Biegung gegeneinander verspannt werden. Der Biegewandler kann an einer Seite an einem ortsfesten Befestigungspunkt der Sensoreinrichtung befestigt sein. Die andere Seite kann frei schwingen oder mit einer bezüglich der Sensoreinrichtung beweglichen Gegenmasse verbunden sein.

Die Resonanzfrequenz des Biegewandlers kann derart gewählt sein, dass sie im Wesentlichen gleich der Resonanzfrequenz bzw. einer Sollantriebsfrequenz des Schwingförderers ist. In diesem Fall ist der Biegewandler in jenem Frequenzbereich, in dem er während des Betriebs des Schwingwandlers typischerweise betrieben wird, besonders empfindlich.

In einer alternativen Ausführungsform ist es möglich, dass das Schwingelement einen Permanentmagneten umfasst, der bezüglich einer Spule beweglich gelagert ist, wobei die Wechselspannung bei einer Schwingung des Permanentmagneten an der Spule abfällt. Mit einer Veränderung der Position des Permanentmagneten zur Spule ändert sich der magnetische Fluss durch die Spule, womit in der Spule eine Wechselspannung induziert wird, die zur Energieversorgung der Sensoreinrichtung nutzbar ist.

Wie eingangs erläutert kann ergänzend oder alternativ die durch die Antriebseinrichtung erzeugte elektromagnetische Strahlung zur Bereitstellung der Betriebsenergie genutzt werden. Es ist möglich, dass die Energieversorgungseinrichtung eine Empfangsantenne für die elektromagnetische Strahlung und eine Gleichrichtschaltung zur Bereitstellung der Betriebsenergie aus einem Empfangssignal der Empfangsantenne umfasst. Die Gleichrichtung kann gleichartig ausgebildet sein, wie die im Zusammenhang mit dem Schwingelement beschriebene Gleichrichtschaltung. Als Empfangsantenne kann eine Spule genutzt werden. Vorzugsweise kann die Empfangsantenne derart abgestimmt sein, dass sie eine maximale Empfindlichkeit im Bereich der Resonanzfrequenz bzw. der gewünschten Betriebsfrequenz des Schwingförderers oder eines ganzzahligen Vielfachen dieser jeweiligen Frequenz aufweist.

Der Betriebsparameter kann eine Schwingung einer Schwingschiene des Schwingförderers betreffen. Insbesondere kann der Betriebsparameter einen Ort und/oder eine Geschwindigkeit und/oder eine Beschleunigung der Schwingschiene beschreiben. Es ist auch möglich, dass der Betriebsparameter eine Amplitude und/oder eine Phase, insbesondere bezüglich einer Phase des Antriebs, und/oder eine Frequenz einer Schwingung der Schwingschiene beschreibt. Als Betriebsparameter kann erfindungsgemäß ein momentaner Wert der Phase der Schwingung der Schwingschiene und/oder ein zeitlicher Verlauf für die genannten Größen ermittelt werden, und optional zusätzlich ein Maximum und/oder ein Mittelwert für die genannten Größen ermittelt werden. Maxima, Mittelwerte und ähnliches können jeweils für eine oder mehrere Schwingungsperioden ermittelt werden.

Es ist auch möglich, dass die Sensoreinrichtung zusätzlich oder alternativ andere Parameter des Schwingförderers erfasst, beispielsweise eine Temperatur der Umgebungsluft bzw. einzelner Komponenten des Schwingförderers, einen Füllstand und/oder eine Füllmasse der Schwingschiene und/oder die Lage von auf der Schwingschiene transportierten Teilen. Es kann jede Art von Sensor, die im Stand der Technik bekannt ist, als Teil der erfindungsgemäßen Sensoreinrichtung genutzt werden. Beispielsweise können Ortssensoren, Geschwindigkeitssensoren, Beschleunigungssensoren, Kraftsensoren, Gewichtssensoren, optische Sensoren und/oder akustische Sensoren genutzt werden.

Erfasst das Sensorelement wenigstens einen Messwert, so umfasst die Sensoreinrichtung eine Verarbeitungseinrichtung zur Ermittlung des Betriebsparameters aus dem Messwert, wobei die Verarbeitungseinrichtung ausgebildet ist, in vorgegebenen oder von dem Messwert abhängigen Abständen, die Kommunikationseinrichtung zur Übertragung des jeweils ermittelten Betriebsparameters anzusteuern. Eine drahtlose Datenübertragung ist relativ energieintensiv. Daher ist es vorteilhaft, wen eine Datenübertragung von der Sensoreinrichtung zur Steuereinrichtung nicht durchgängig sondern durch zeitlich voneinander beabstandete Übertragungen erfolgt. Insbesondere kann ein Betriebsparameter jeweils nach einem Schwingungszyklus oder nach einer vorgegebenen Anzahl von Schwingungszyklen übertragen werden. Es ist möglich, dass feste Zeitintervalle vorgegeben sind, nach denen jeweils eine Übertragung des Betriebsparameters erfolgt, es ist jedoch auch möglich, dass die Verarbeitungseinrichtung abgeschlossene Schwingungszyklen erkennt und beispielsweise beim Erreichen einer bestimmten Schwingungsphase und/oder nach Abschluss einer bestimmten Anzahl von Schwingungszyklen eine Übertragung durchführt.

Erfindungsgemäß kann als Betriebsparameter auch ein zeitlicher Verlauf des Messwertes oder eines aus dem Messwert ermittelten Wertes für ein vorgegebenes oder aus den Messwerten ermitteltes Zeitintervall übertragen werden. Es ist möglich, dass nach einer vorgegebenen Anzahl von Schwingungszyklen jeweils Messwerte für einen der Schwingungszyklen übertragen werden. Dabei ist es vorteilhaft, wenn Daten übertragen werden, die ein Zeitintervall betreffen, das sich etwas über den Schwingungszyklus hinaus erstreckt, um die "Ränder" des Schwingungszyklus mit abzubilden und damit eine leichtere Weiterverarbeitung der Daten zu ermöglichen.

Wird als Betriebsparameter beispielsweise ein zeitlicher Verlauf der Beschleunigung während eines Schwingungszyklusses übertragen und erfolgt die Erfassung der Beschleunigungswerte mit einer Sensorrate von 10 KHz, so müssten bei Übertragung aller Messwerte 10.000 Messwerte pro Sekunde an die Steuereinrichtung übertragen werden. Erfolgt eine Datenübertragung jedoch beispielsweise nur für jeden hundertsten Schwingungszyklus, so kann die zu übertragende Datenmenge auf 100 Messwerte pro Sekunde reduziert werden. Die zur Datenübertragung notwendige Menge an Betriebsenergie kann deutlich reduziert werden.

Die Sensoreinrichtung kann wenigstens eine Wandlereinrichtung zur Analog-Digital-Wandlung des Messwerts oder des Betriebsparameters umfassen, wobei die Kommunikationseinrichtung zur digitalen Übertragung des Betriebsparameters ausgebildet ist. Eine digitale Übertragung des Betriebsparameters kann mit bekannten Protokollen, wie beispielsweise Bluetooth ^{®} oder WLAN, erfolgen. Die Übertragung kann jedoch auch ohne Verwendung eines übergeordneten Protokolls, beispielsweise durch digitale Phasen- bzw. Amplitudenmodulation eines Trägersignals, erfolgen. Es ist möglich, dass zusätzlich zum Betriebsparameter eine eindeutige Identifizierungsinformation für die Sensoreinrichtung übertragen wird. In diesem Fall können problemlos mehrere Sensoreinrichtungen in einem Schwingförderer bzw. einer Industrieanlage genutzt werden, da stets erkannt werden kann, welche der Sensoreinrichtungen die übertragenen Betriebsparameter bereitstellt. Es ist auch möglich, den Betriebsparameter und/oder die Identifikationsinformation verschlüsselt zu übertragen. Der Betrieb des Schwingförderers wird in diesem Fall gegen Manipulationen bzw. versehentlich übertragene Informationen gesichert.

Neben der erfindungsgemäßen Sensoreinrichtung betrifft die Erfindung einen Schwingförderer, umfassend eine Schwingschiene, eine Antriebseinrichtung zur Anregung einer Schwingung der Schwingschiene und eine Steuereinrichtung zur Steuerung der Antriebseinrichtung, wobei der Schwingförderer eine erfindungsgemäße Sensoreinrichtung umfasst, und wobei die Steuereinrichtung dazu dient, die Antriebseinrichtung in Abhängigkeit des von der Sensoreinrichtung drahtlos übertragenen Betriebsparameters zu steuern. Die Sensoreinrichtung weist wenigstens ein Sensorelement zur Erfassung des Betriebsparameters oder wenigstens einem Messwerts, aus dem der Betriebsparameter bestimmbar ist, auf. Daneben umfasst die Sensoreinrichtung wenigstens eine Kommunikationseinrichtung zur drahtlosen Übertragung des Betriebsparameters an die Steuereinrichtung und eine Energieversorgungseinrichtung zur Versorgung der Sensoreinrichtung mit Betriebsenergie. Die Energieversorgungseinrichtung dient zur Umsetzung einer durch die Antriebseinrichtung erzeugten Vibration und/oder elektromagnetischen Strahlung in die Betriebsenergie. Mögliche Weiterbildungen der Sensoreinrichtung sind der vorangehenden Beschreibung zu entnehmen. Die Sensoreinrichtung kann insbesondere mechanisch mit der Schwingschiene oder einem die Schwingschiene lagernden Lagerelement gekoppelt sein. Eine Kopplung kann beispielsweise durch Verschrauben oder Verklemmen der Sensoreinrichtung mit der Schwingschiene oder dem Lagerelement erfolgen.

Der Betriebsparameter kann eine Phase und/oder eine Amplitude und/oder eine Frequenz der Schwingschiene betreffen, wobei die Sensoreinrichtung die Steuereinrichtung und die Antriebseinrichtung ein Regelkreis zur Regelung der Phase und/oder der Amplitude und/oder der Frequenz der Schwingung auf einen vorgegebenen Wert bilden können. Die Regelung der Schwingung erfolgt vorzugsweise derart, dass eine Frequenz der Schwingung nahe der Resonanzfrequenz der durch die Lagerelemente gelagerten Schwingschiene ist.

Alternativ ist es möglich, dass die Steuereinrichtung ausgebildet ist, den Betriebsparameter mit einer vorgegebenen Zeitverzögerung als Steuersignal für die Antriebseinrichtung bereitzustellen. Ist der Betriebsparameter eine Beschleunigung oder eine Geschwindigkeit der Schwingschiene, so entspricht dies einer Rückkopplung der Schwingung der Schwingschiene auf den Antrieb der Schwingschiene. Durch eine Anpassung der Zeitverzögerung und somit der Phasenverschiebung zwischen dem Rückkoppelsignal und der Schwingung der Schwingschiene ist es möglich, den Schwingförderer stabil an oder in der Nähe seiner Resonanz zu betreiben.

Ein Rückkoppelsignal, das gegenüber einem Ortssignal für die Schwingschiene um 90° phasenverschoben wäre, würde einem Betrieb des Schwingförderers an der Resonanzfrequenz entsprechen. Geringere Phasenverschiebungen verschieben die Schwingfrequenz des Schwingförderers zu niedrigeren Frequenzen und umgekehrt. Wird die Schwingung der Schwingschiene näherungsweise als harmonische Schwingung betrachtet, so ist ein Messsignal für die Geschwindigkeit der Schwingschiene gegenüber einem Messsignal für den Ort um 90° verschoben und ein Messsignal für die Beschleunigung um 180°. Daher kann auch ein Betriebsparameter, der eine momentane Beschleunigung oder eine momentane Geschwindigkeit der Schwingschiene beschreibt, durch eine entsprechende Zeitverzögerung, das heißt durch eine entsprechende Phasenverzögerung, rückgekoppelt werden, um einen Betrieb des Schwingförderers bei der Resonanzfrequenz oder nahe an der Resonanzfrequenz zu ermöglichen.

Die Antriebseinrichtung kann eine Spule umfassen, wobei an der Schwingschiene ein Anker angeordnet ist, der bei Bestromung der Spule durch die Spule angezogen wird, wobei die Steuereinrichtung zur Bestromung der Spule in Abhängigkeit des Betriebsparameters ausgebildet ist. Spulen erzeugen starke elektromagnetische Streufelder, weshalb, wie vorangehend erläutert, zur Energieversorgung der Sensoreinrichtung neben den Vibrationen oder alternativ zu diesen die elektromagnetische Strahlung, die durch die Antriebseinrichtung bzw. durch die Spulen abgegeben wird, genutzt werden kann.

Weitere Vorteile und Einzelheiten der Erfindung ergeben sich aus den folgenden Ausführungsbeispielen sowie den zugehörigen Zeichnungen. Dabei zeigen schematisch:
- Figur 1: ein Ausführungsbeispiel eines erfindungsgemäßen Schwingförderers,
- Figur 2: ein Ausführungsbeispiel einer erfindungsgemäßen Sensoreinrichtung,
- Figuren 3 bis 6: Detailansichten von Schwingelementen verschiedener Ausführungsbeispiele erfindungsgemäßer Sensoreinrichtungen, und
- Figuren 7 und 8: Steuereinrichtungen verschiedener Ausführungsbeispiele erfindungsgemäßer Schwingförderer.

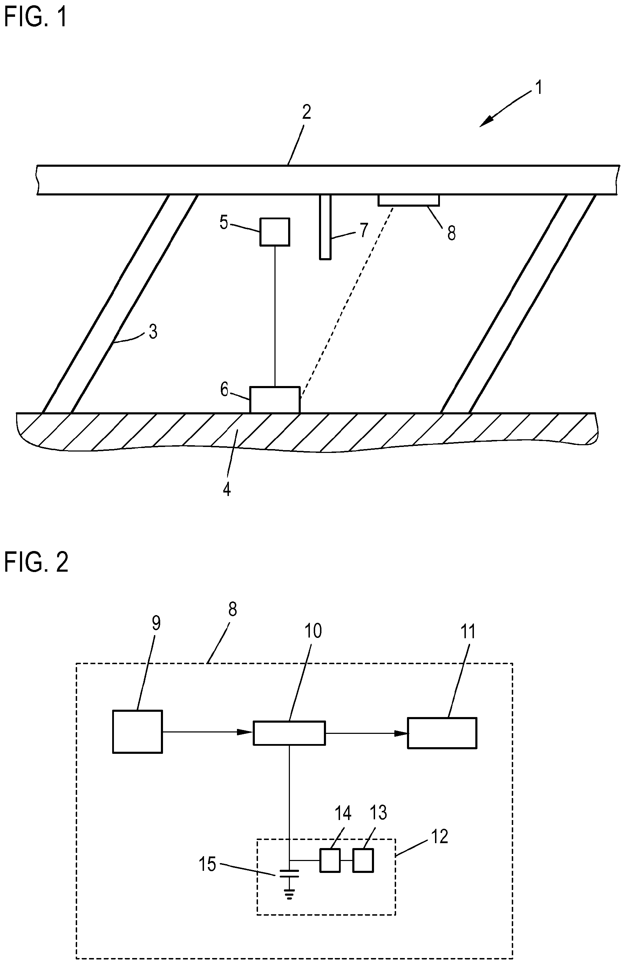

Figur 1 zeigt einen Schwingförderer 1, der ausgebildet ist, Objekte durch eine Schwingung der Schwingschiene 2 entlang der Schwingschiene 2 zu transportieren. Die Schwingschiene 2 ist über Blattfedern 3 an einer Basisplatte 4 befestigt. Die Schwingschiene 2 wird durch eine Antriebseinrichtung 5 in Schwingung versetzt. Die Antriebseinrichtung 5 umfasst hierzu wenigstens eine Spule, durch die ein an der Schwingschiene 2 angeordneter Anker 7 bei einer Bestromung der Spule angezogen wird. Wird die Bestromung der Spule unterbrochen, so wird die Schwingschiene 2 durch die Blattfedern 3 wieder von der Spule wegbewegt. Durch eine periodische Bestromung der Spule kann die Schwingschiene 2 somit in Schwingung versetzt werden.

Um einen effizienten Betrieb des Schwingförderers 1 zu ermöglichen, ist es vorteilhaft, wenn die Schwingschiene 2 an oder in der Nähe der Resonanzfrequenz der Schwingschiene 2 betrieben wird. Eine entsprechende Ansteuerung der Antriebseinrichtung 5 bzw. eine entsprechende Bestromung der Spule erfolgt durch die Steuereinrichtung 6. Problematisch ist hierbei, dass die Resonanzfrequenz der Schwingschiene 2 von einer Vielzahl von Faktoren abhängt, die sich teilweise auch während des Betriebs des Schwingförderers 1 ändern können, beispielsweise von der Temperatur der Komponenten des Schwingförderers 1. Um einen zuverlässigen Betrieb des Schwingförderers 1 an oder in der Nähe der Resonanzfrequenz der Schwingschiene 2 zu ermöglichen, umfasst der Schwingförderer 1 daher zusätzlich eine Sensoreinrichtung 8, die dazu ausgebildet ist, ein Betriebsparameter des Schwingförderers 1 zu erfassen und drahtlos an die Steuereinrichtung 6 zu übertragen. Als Betriebsparameter wird ein zeitlicher Verlauf der Beschleunigung der Schwingschiene 2 übertragen. Alternativ oder ergänzend könnten als Betriebsparameter weitere Parameter, die die Schwingung der Schwingschiene 2 beschreiben, übertragen werden, beispielsweise ein Ort und/oder eine Geschwindigkeit der Sensoreinrichtung 8 oder eine Schwingungsamplitude und/oder -phase und/oder -frequenz. In einer alternativen Ausführungsform wäre es auch möglich, dass zusätzlich oder alternativ als Betriebsparameter eine lokale Temperatur im Bereich der Sensoreinrichtung, ein, beispielsweise optisch erfasster, Füllstand der Schwingschiene und/oder eine Füllmasse und/oder eine Lage von durch den Schwingförderer transportierten Teilen als Betriebsparameter erfasst und drahtlos an die Steuereinrichtung 6 übermittelt werden.

Um einen vollständig drahtlosen Betrieb der Sensoreinrichtung 8 zu ermöglichen, umfasst diese eine nicht dargestellte Energieversorgungseinrichtung zur Versorgung der Sensoreinrichtung 8 mit Betriebsenergie, wobei die Energieversorgungseinrichtung zur Umsetzung einer durch die Antriebseinrichtung 5 erzeugten Vibration in die Betriebsenergie dient. In alternativen Ausführungsformen wäre es möglich, dass ergänzend oder alternativ eine durch die Antriebseinrichtung 5 bereitgestellte elektromagnetische Strahlung in die Betriebsenergie umgesetzt wird.

Figur 2 zeigt schematisch den Aufbau der Sensoreinrichtung 8. Die Sensoreinrichtung 8 umfasst ein Sensorelement 9, eine Verarbeitungseinrichtung 10 und eine Kommunikationseinrichtung 11 sowie die Energieversorgungseinrichtung 12, die die weiteren Komponenten der Sensoreinrichtung 8 soweit erforderlich mit Energie versorgt. Die Sensoreinrichtung 9 ist ein Beschleunigungssensor, der eine Ausgangsspannung bereitstellt, die eine auf das Sensorelement 9 und somit auf die Sensoreinrichtung 8 wirkende Beschleunigung beschreibt. Entsprechende Beschleunigungssensoren sind im Stand der Technik bekannt und sollen nicht detailliert diskutiert werden. Beispielsweise kann ein Beschleunigungssensor genutzt werden, der ein Piezoelement umfasst, das zwischen dem Gehäuse der Sensoreinrichtung und einer Gegenmasse angeordnet ist. Wirkt auf das Sensorelement eine Beschleunigung, so kann an diesem Piezoelement eine Spannung abgegriffen werden, die diese Beschleunigung beschreibt. Beschleunigungssensoren erfordern häufig keine Energieversorgung, so dass Figur 2 keine Verbindung des Sensorelements mit der Energieversorgungseinrichtung 12 zeigt. Wird ein aktives Sensorelement verwendet, das eine Energieversorgung benötigt, so kann auch dieses durch die Energieversorgungseinrichtung 12 mit Energie versorgt werden. In alternativen Ausführungsformen der Sensoreinrichtung 8 können auch andere Sensoren, beispielsweise Temperatursensoren, Geschwindigkeitssensoren oder ähnliches, verwendet werden, um Messwerte bzw. Betriebsparameter bereitzustellen.

Die Verarbeitungseinrichtung 10 digitalisiert die durch die Sensoreinrichtung 9 bereitgestellten Messwerte, ermittelt aus ihnen einen zu übertragenden Betriebsparameter und steuert die Kommunikationseinrichtung 11, um diesen Betriebsparameter an die Steuereinrichtung 6 zu übertragen. In einer ersten Ausführungsform wird durch die Verarbeitungseinrichtung 10 periodisch der durch die Sensoreinrichtung 9 bereitgestellte Messwert erfasst, unter Umständen skaliert bzw. mit einem Offset zu versehen, um beispielsweise vorgegebene Kalibrierdaten für das Sensorelement 9 zu berücksichtigen, und die Kommunikationseinrichtung 11 wird angesteuert, um diesen Messwert als Betriebsparameter zu übertragen.

Der Betriebsparameter wird hierzu mit einer Identifikationsinformation verknüpft, die die Sensoreinrichtung 8 eindeutig identifiziert. Dies ermöglich, dass mehrere Sensoreinrichtungen 8 nutzbar sind und dennoch stets ermittelt werden kann, durch welche der Sensoreinrichtungen 8 ein Messwert bereitgestellt wird. So können in einem Schwingförderer 1 mehrere Sensoreinrichtungen genutzt werden, um eine Beschleunigung an mehreren Bereichen des Schwingförderers 1 zu messen und es können weitere Sensoreinrichtungen vorgesehen werden, um beispielsweise Betriebstemperaturen, Füllstände oder ähnliches zu ermitteln und an die Steuereinrichtung 6 zu übertragen. Die Übertragung des Betriebsparameters kann durch Standardprotokolle, beispielsweise gemäß dem WLAN-Standard oder über Bluetooth ^{®} erfolgen. Es ist auch möglich, Kommunikationsprotokolle zur Drahtloskommunikation im Rahmen der Industrieanlagensteuerung zu nutzen. Alternativ wäre es möglich, ein proprietäres Kommunikationsprotokoll zu nutzen, wobei beispielsweise eine Datenübertragung durch digitale Amplituden- und/oder Phasenmodulation erfolgen kann. Die Übertragung des Betriebsparameters an die Steuereinrichtung 6 erfolgt vorzugsweise verschlüsselt, wodurch eine versehentliche oder gezielte Störung des Betriebs des Schwingförderers 1 durch andere Kommunikationseinrichtungen verhindert werden kann.

Die Übertragung des Betriebsparameters durch die Kommunikationseinrichtung 11 ist energieintensive, weshalb es wünschenswert ist, die übertragene Datenmenge zu reduzieren. Dies wird in einer alternativen Ausführungsform erreicht, indem nicht jeder einzelne Messwert als Betriebsparameter übertragen wird. Als Betriebsparameter wird jeweils ein zeitlicher Verlauf der Messwerte übertragen, der während einer Schwingungsperiode oder während eines Teils der Schwingungsperiode der Schwingschiene 2 erfasst wurde.

Um den Energiebedarf der Kommunikationseinrichtung 11 weiter zu senken ist es möglich, einen entsprechend zeitlichen Verlauf nicht für jede Schwingungsperiode sondern beispielsweise nur für jede dritte Schwingungsperiode zu übertragen. Um dies zu erreichen, ist die Verarbeitungseinrichtung 10 ausgebildet, einzelne Schwingungsperioden der Schwingschiene 2 zu ermitteln. Schwingungsperioden können durch periodische Beschleunigungsmuster erkannt werden. Die Verarbeitungseinrichtung 10 fasst anschließend die Messwerte eines dieser Schwingungszyklen zu dem Betriebsparameter zusammen, wobei vorteilhaft zusätzlich einige zusätzliche Messwerte vor Beginn des jeweiligen Schwingungsintervalls und nach Ende des jeweiligen Schwingungsintervalls mit berücksichtigt werden, um eine anschließende Weiterverarbeitung der Messdaten durch die Steuereinrichtung 6 zu erleichtern. Der Betriebsparameter stellt somit eine zeitliche Abfolge von Messwerten dar, die Beschleunigungen in einem Zeitintervall beschreiben, das etwas länger ist als eine Schwingungsperiode der Schwingschiene 2. Dieser Betriebsparameter wird anschließend wie vorangehend erläutert über die Kommunikationseinrichtung 11 an die Steuereinrichtung 6 übertragen. Durch die Erkennung einzelner Schwingungsperioden durch die Verarbeitungseinrichtung 10 ist es leicht möglich, eine entsprechende Übertragung jeweils nur nach mehreren Schwingungsperioden durchzuführen.

Alternativ könnte die Verarbeitungseinrichtung 10 jeweils Messdaten innerhalb eines vorgegebenen ersten Zeitintervalls erfassen und einzeln oder zusammengefasst an die Steuereinrichtung übertragen und anschließend jeweils für ein zweites vorgegebenes Zeitintervall keine Übertragung durchführen. Soll eine Steuerung des Schwingförderers 1 beispielsweise ab einer Frequenz von 10 Hz erfolgen, so ist es ausreichend, die Messwerte jeweils für ein 200 ms Intervall zu erfassen, womit sichergestellt ist, dass dieses Messintervall wenigstens eine Schwingungsperiode umfasst. Anschließend kann die Erfassung bzw. Übertragung der Messdaten für beispielsweise eine Sekunde unterbrochen werden.

In einer weiteren alternativen Ausführungsform der Sensoreinrichtung 8 kann die Verarbeitungseinrichtung 10 ausgebildet sein, aus den Messwerten wenigstens einen Betriebsparameter zu berechnen, der die Schwingung in Form von Schwingungsparametern wie einer Schwingungsamplitude, einer Schwingungsfrequenz und/oder einer Schwingungsphase beschreibt, und diesen als den Betriebsparameter an die Steuereinrichtung 6 zu übertragen. Eine Schwingungsfrequenz kann bestimmt werden, indem wie vorangehend erläutert eine Schwingungsperiode ermittelt wird.

Eine Schwingungsamplitude kann beispielsweise dadurch bestimmt werden, dass ein Maximalwert der Beschleunigung während einer oder mehrerer Schwingungsamplituden bestimmt wird, da die maximale Beschleunigung während einer Schwingung mit der Schwingungsamplitude korreliert ist. Phaseninformationen können absolut übertragen werden, beispielsweise indem bei einem Nulldurchgang an einer positiven Flanke der Beschleunigung ein Triggersignal über die Kommunikationseinrichtung an die Steuereinrichtung übermittelt wird. Die Phasenlage relativ zu einer Antriebsphase kann anschließend in der Steuereinrichtung bestimmt werden.

Alternativ wäre es beispielsweise möglich mit einer Empfangsantenne durch die Antriebseinrichtung 5 abgestrahlte elektromagnetische Strahlung zu empfangen und aus einer relativen Phasenlage zwischen der empfangenen elektromagnetischen Strahlung und dem Beschleunigungssignal eine relative Phase zwischen der Phase der Schwingung der Schwingschiene 2 und der Phase eines Bestromungssignals für eine Spule der Antriebseinrichtung 5 zu bestimmen und diese als Betriebsparameter an die Steuereinrichtung 6 zu übertragen.

Die Energieversorgung der Sensoreinrichtung 8, insbesondere der Verarbeitungseinrichtung 10 und der Kommunikationseinrichtung 11, erfolgt durch die Energieversorgungseinrichtung 12. Die Energieversorgungseinrichtung 12 umfasst ein Schwingelement 13, das bei einem mechanischen Kontakt der Sensoreinrichtung 8 zu dem Schwingförderer 1 durch Vibration in Schwingung versetzbar ist und eine Gleichrichtschaltung 14. Bei einer Schwingung des Schwingelements 13 wird eine Wechselspannung bereitgestellt und die Gleichrichtschaltung 14 richtet diese gleich und stellt die Betriebsenergie für die Sensoreinrichtung 8 bereit.

Zur Stabilisierung der Energieversorgung kann zusätzlich, wie in Figur 2 dargestellt, ein Energiespeicherelement 15 vorgesehen sein. Das Energiespeicherelement 15 kann ein Kondensator sein, der eine durch die Gleichrichtschaltung 14 bereitgestellte Spannung glättet. Alternativ wäre es jedoch möglich, eine Batterie, einen Superkondensator oder ähnliches zu nutzen, um eine Energieversorgung der Sensoreinrichtung 8 auch dann zu ermöglichen, wenn kurzfristig keine Energie aus einer Schwingung gewonnen werden kann. Die Kapazität der Energiespeichereinrichtung 15 kann klein gewählt werden, da während des Betriebs des Schwingförderers 1 die Sensoreinrichtung 8 mit Energie versorgt wird, indem erzeugte Vibrationen in Betriebsenergie umgesetzt werden.

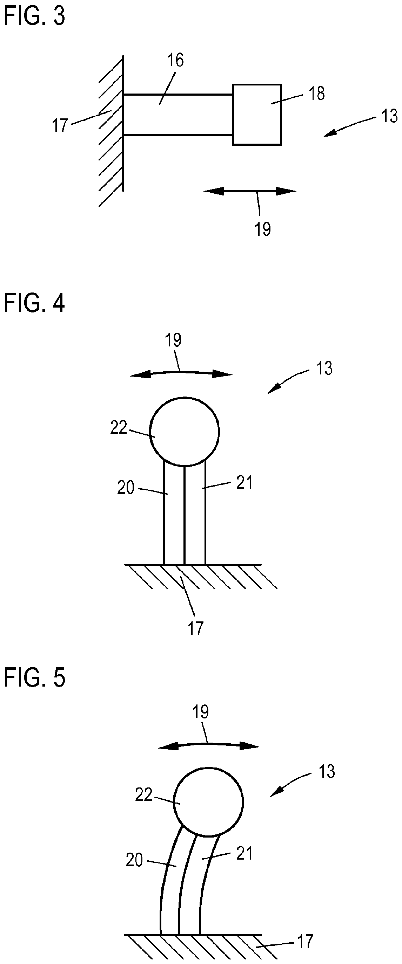

Die Gleichrichtschaltung 14 kann als Voll- oder Halb-Brücke ausgebildet sein. Die Gleichrichtung kann rein passiv, beispielsweise durch Dioden, oder aktiv, beispielsweise durch entsprechend getaktete elektrische Schalter, beispielsweise durch Transistoren, erfolgen. Verschiedene Ausbildungsmöglichkeiten für das Schwingelement 13 werden im weiteren Text mit Bezug auf die Figuren 3 bis 6 erläutert.

In einer alternativen Ausführungsform der Sensoreinrichtung 8 wäre es möglich, ergänzend oder alternativ zu dem Schwingelement 13 eine Empfangsantenne für elektromagnetische Strahlung vorzusehen, die durch die Antriebseinrichtung 5 abgestrahlt wird. Erfolgt ein Antrieb des Schwingförderers 1, wie in Figur 1 dargestellt, durch das Anziehen eines Jochs 7 durch eine Spule in der Antriebseinrichtung 5, so werden durch die Spule relativ starke elektromagnetische Wechselfelder abgestrahlt. Diese können durch die Empfangsantenne empfangen werden. Durch eine anschließende Gleichrichtung kann Betriebsenergie für die Sensoreinrichtung 8 bereitgestellt werden.

Figur 3 zeigt eine mögliche Ausbildung des Schwingelements 13. Ein Piezoelement 16 ist zwischen einem Befestigungspunkt am Gehäuse 17 der Sensoreinrichtung 8 und einer Gegenmasse 18 angeordnet. Bei einer Schwingung der Sensoreinrichtung 8 in die durch Pfeil 19 gezeigte Richtung wird aufgrund der Masseträgheit der Gegenmasse 18 das Piezoelement 16 verformt, das heißt komprimiert bzw. expandiert. Wird ein entsprechend strukturiertes Piezoelement, beispielsweise ein Stack-Piezo, genutzt, so ist am Piezoelement 16 eine Spannung abgreifbar, die mit der Expansion bzw. Kompression des Piezoelements 16 skaliert. Bei einer Schwingung des Sensorelements 8 und somit einer relativen Schwingung der Gegenmasse 18 zur Wand 17 des Sensorelements 8 wird somit durch das Piezoelement 16 eine Wechselspannung bereitgestellt, die durch die Gleichrichtschaltung 14 zur Bereitstellung der Energie gleichgerichtet werden kann. Das in Figur 3 dargestellte Schwingelement 13 entspricht bezüglich seines Aufbaus im Wesentlichen einem piezoelementbasierten Beschleunigungssensors. Während es bei Beschleunigungssensoren jedoch vorteilhaft ist, Einkristalle als Piezoelement zu nutzen, um eine hohe Messgenauigkeit zu erreichen, ist es vorteilhaft, für das Schwingelement ein polykristallines Piezoelement 16 zu nutzen, um eine hohe Energieausbeute zu erreichen.

Der Schwingförderer 1 soll typischerweise bei oder nahe an seiner Resonanzfrequenz betrieben werden. Die Energieausbeute der Energieversorgungseinrichtung kann weiter verbessert werden, wenn das Schwingelement derart ausgebildet wird, das es eine Resonanzfrequenz aufweist, die im Wesentlichen der Resonanzfrequenz des Schwingförderers 1 entspricht, so dass im Normalbetrieb des Schwingförderers 1 das Schwingelement 13 in Resonanz schwingt. Eine besonders gute Ausnutzung dieser Resonanzbedingung ist möglich, wenn als Schwingelement ein Biegewandler genutzt wird, wie er in den Figuren 4 und 5 gezeigt ist. Figur 4 zeigt den Biegewandler im entspannten Zustand, in Figur 5 ist ein gebogener Zustand des Biegewandlers dargestellt. Der Biegewandler umfasst eine Gegenmasse 22, die in Richtung des Pfeils 19 gegenüber der Wand der Sensoreinrichtung 17 schwingen kann. Zwischen der Gegenmasse 22 und der Wand 17 ist ein Bimorph angeordnet, der aus zwei Piezoelementen 20, 21 aufgebaut ist. Wird der Biegewandler in Figur 5 dargestellt aufgrund der Trägheit der Gegenmasse 22 bei einer Schwingung der Sensoreinrichtung 8 in Richtung des Pfeils 19 gebogen, so wird das Piezoelement 21 komprimiert und das Piezoelement 20 gedehnt. An den Piezoelementen 20, 21 fallen somit einander entgegengerichtete Spannungen ab, die durch eine entsprechende Verschaltung der Piezoelemente 20, 21 addiert und dem Gleichrichter 14 zugeführt werden können.

Der Biegewandler kann zusätzlich zu den Piezoelementen 20, 21 eine oder mehrere nicht dargestellte Trageschichten umfassen. In einer alternativen Ausführungsform wäre es möglich, nur ein Piezoelement 20 oder 21 zu nutzen, und dieses auf ein Trägermaterial, beispielsweise auf einen Kunststoffstreifen, aufzubringen. In diesem Fall würde ausschließlich eine Piezoschicht komprimiert bzw. expandiert und die an dieser Piezoschicht abfallende Spannung würde der Gleichrichtschaltung 14 zugeführt.

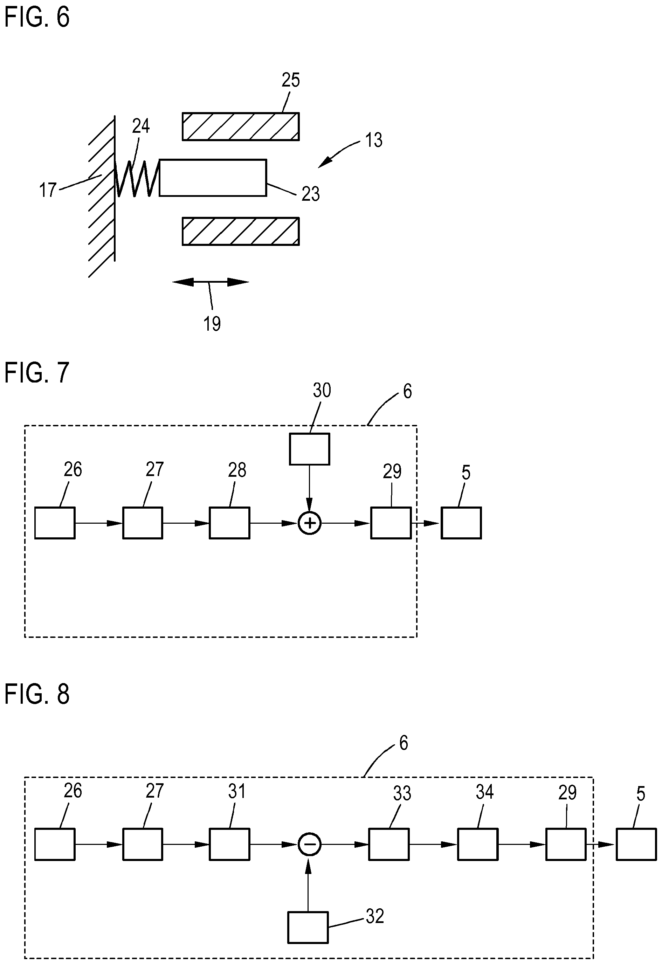

Figur 6 zeigt ein weiteres alternatives Schwingelement 13, bei dem statt einem piezoelektrischen Effekt eine elektromagnetische Induktion in einer Spule 25 genutzt wird, um die Wechselspannung für die Gleichrichtschaltung 14 bereitzustellen. Ein Permanentmagnet 23 ist mit einem elastischen Element 24 an der Wand 17 der Sensoreinrichtung 8 gelagert. Schwingt die Sensoreinrichtung 8 in Richtung des Pfeils 19, so bewegt sich der Permanentmagnet 23 bezüglich einer zur Sensoreinrichtung 8 ortsfesten Spule 25. Somit ändert sich der magnetische Fluss durch die Spule 25 und es wird eine Wechselspannung in der Spule 25 induziert, die der Gleichrichtschaltung 14 zuführbar ist.

Figuren 7 und 8 zeigen zwei mögliche Ausbildungen der Steuereinrichtung 6 des Schwingförderers 1. Die Steuereinrichtung 6 in Figur 7 ist derart ausgebildet, dass sie bei einer Bereitstellung der momentanen Beschleunigung bzw. der momentanen Geschwindigkeit als Betriebsparameter durch die Sensoreinrichtung 8 einen Betrieb des Schwingförderers an der oder nahe der Resonanzfrequenz ermöglicht. Der drahtlos übertragene Betriebsparameter wird durch die Antenne 26 empfangen und an die Verarbeitungseinrichtung 27 bereitgestellt. Diese demoduliert das Empfangssignal und verwirft optional Daten, die von weiteren Sensoreinrichtung empfangen wurden, die eine andere Identifikationsinformation aufweisen. Anschließend wird das Empfangssignal, also die momentane Beschleunigung bzw. die momentane Geschwindigkeit, in ein Analogsignal gewandelt. Durch einen Phasenschieber 28 wird dieses Signal phasengeschoben und anschließend einem Spulentreiber 29 zugeführt, der ein Stromsignal zur Bestromung der Spule der Antriebseinrichtung 5 bereitstellt.

Die Steuereinrichtung 6 stellt somit ein Signal zur Bestromung der Spule zur Verfügung, dass einem phasengeschobenen Beschleunigungs- bzw. Geschwindigkeitssignal entspricht. Wird die Schwingung des Schwingförderers 1 näherungsweise als harmonische Schwingung betrachtet, so liegt eine Resonanz der Schwingung der Schwingschiene 2 dann vor, wenn ein Antrieb mit einem Signal erfolgt, das gegenüber einem momentanen Ort der Schwingschiene 90° phasenverschoben ist. Eine Geschwindigkeit bzw. eine Beschleunigung, die durch die Sensoreinrichtung 8 erfasst wird, ist gegenüber einem Ort der Schwingschiene 2 bei einer harmonischen Schwingung jedoch um 90° bzw. 180° phasenverschoben. Durch eine entsprechende Phasenschiebung durch die Phasenschiebeeinrichtung 28 kann aus einem Beschleunigungs- bzw. Geschwindigkeitssignal somit ein Steuersignal für einen resonanten Antrieb des Schwingförderers 1 generiert werden. Der Schwingförderer 1 ist in diesem Fall selbst erregt.

Um einen automatischen Start des Schwingförderers 1 zu ermöglichen, ist in der Steuereinheit 6 zudem ein Starter 30 vorgesehen, dessen Ausgangssignal zu dem Ausgangssignal des Phasenschiebers addiert wird. Dieser kann beispielsweise ein Pulssignal bereitstellen, um eine Anfangsanregung für den Schwingförderer 1 zu erzeugen.

In alternativen Ausführungsformen der Steuereinrichtung 6 ist es möglich, die Verarbeitung in der Steuereinrichtung 6 weitgehend digital durch eine digitale Schaltung, einen Mikroprozessor oder ähnliches durchzuführen. In diesem Fall erfolgt nach der Demodulation des Empfangssignals durch die Verarbeitungseinrichtung 27 zunächst keine Digital-Analog-Wandlung, sondern das Empfangssignal wird digital weiterverarbeitet. Die Digital-Analog-Wandlung kann in diesem Fall wahlweise nach der Phasenverschiebung des Signals, nach der Addition des Anregungssignals oder erst bei der Bereitstellung eines Steuerstroms im Spulentreiber 29 erfolgen.

Figur 8 zeigt die Steuereinrichtung 6 eines alternativen Ausführungsbeispiels des Schwingförderers 1. Der Empfang des Betriebsparameters durch die Antenne 26 und die Verarbeitungseinrichtung 27 sowie die Ansteuerung der Spule 5 durch den Spulentreiber 29 erfolgen wie zur Figur 7 erläutert. Die Bereitstellung eines Steuersignals für den Spulentreiber 29 in Abhängigkeit des Betriebsparameters erfolgt jedoch im Fall der Figur 8 über einen im Folgenden erläuterten Regelkreis. Durch eine zweite Verarbeitungseinrichtung 31 können aus dem Betriebsparameter abgeleitete Größen generiert werden. Wird als Betriebsparameter beispielsweise ein zeitlicher Verlauf einer Beschleunigung übertragen, so kann die zweite Verarbeitungseinrichtung 31 eine Frequenz, Amplitude und/oder Phase der Schwingung aus diesem zeitlichen Verlauf berechnen. Die zweite Verarbeitungseinrichtung 31 stellt somit einen abgeleiteten Betriebsparameter bereit, der aus dem Betriebsparameter berechnet ist. Alternativ wäre es möglich, dass als Betriebsparameter direkt eine Amplitude, Phase und/oder Frequenz übertragen wird. In diesem Fall wäre eine Vorverarbeitung durch die zweite Verarbeitungseinrichtung 31 unnötig und die Steuereinrichtung 6 könnte ohne die Verarbeitungseinrichtung 31 ausgebildet sein. Von dem abgeleiteten Betriebsparameter bzw. von dem Betriebsparameter wird ein Sollwert 32 abgezogen, der einem Wert entspricht, auf den der Betriebsparameter bzw. der abgeleitete Betriebsparameter geregelt werden soll. Das Differenzsignal wird anschließend einem Regelglied 33, beispielsweise einem Proportional-Integral-Glied zugeführt. Dieses steuert einen Schwingungsgenerator 34, der ein Steuersignal generiert, das über den Spulentreiber 29 der Spule zugeführt wird. Beispielsweise generiert der Schwingungsgenerator 34 ein sinusförmiges Signal, dessen Amplitude, Phase und/oder Frequenz durch den Regler 33 angepasst wird. Durch Vorgabe entsprechender Sollwerte 32 kann die Phase, die Amplitude und/oder die Frequenz, mit der die Schwingschiene 2 schwingt, auf einen definierten Wert eingestellt werden. Die Phase kann insbesondere eine relative Phase zwischen dem Steuersignal für die Spule der Antriebseinrichtung 5 und dem zeitlichen Verlauf des Betriebsparameters sein. Ein resonanter Betrieb des Schwingförderers 1 kann mit der in Figur 8 dargestellten Steuereinrichtung 6 beispielsweise erreicht werden, indem eine Phasenlage von 90° zwischen der mechanischen Schwingung der Schwingschiene 2 und dem Bestromungssignal für die Spule vorgegeben wird.

## Patentansprüche

1. Sensoreinrichtung, die zur Bereitstellung wenigstens eines Betriebsparameters eines Schwingförderers (1) an eine Steuereinrichtung (6) dient, wobei die Steuereinrichtung (6) zur Steuerung einer Antriebseinrichtung (5) zur Anregung von Schwingung einer Schwingschiene (2) in Abhängigkeit des Betriebsparameters dient, wobei die Sensoreinrichtung (8) wenigstens ein Sensorelement (9) zur Erfassung wenigstens eines Messwertes, aus dem der Betriebsparameter bestimmbar ist, umfasst, und die Sensoreinrichtung (8) wenigstens eine Kommunikationseinrichtung (11) zur drahtlosen Übertragung des Betriebsparameters an die Steuereinrichtung (6) und eine Energieversorgungseinrichtung (12) zur Versorgung der Sensoreinrichtung (8) mit Betriebsenergie umfasst, wobei die Energieversorgungseinrichtung (12) zur Umsetzung einer durch die Antriebseinrichtung (5) erzeugten Vibration und/oder elektromagnetischen Strahlung in die Betriebsenergie dient, wobei die Sensoreinrichtung (8) eine Verarbeitungseinrichtung (10) zur Ermittlung des Betriebsparameters aus dem Messwert umfasst, wobei die Verarbeitungseinrichtung (10) ausgebildet ist, in vorgegebenen oder von dem Messwert abhängigen Abständen die Kommunikationseinrichtung (11) zur Übertragung des jeweils ermittelten Betriebsparameters anzusteuern, **dadurch gekennzeichnet, dass** der Betriebsparameter eine Phase einer Schwingung der Schwingschiene (2) beschreibt, und/oder dass als Betriebsparameter ein zeitlicher Verlauf des Messwertes für ein aus den Messwerten ermitteltes Zeitintervall übertragen wird oder als Betriebsparameter ein zeitlicher Verlauf eines aus dem Messwert ermittelten Wertes für ein aus den Messwerten ermitteltes Zeitintervall übertragen wird.

2. Sensoreinrichtung nach Anspruch 1, **dadurch gekennzeichnet, dass** die Energieversorgungseinrichtung (12) ein Schwingelement (13), das bei einem mechanischen Kontakt der Sensoreinrichtung (8) zu dem Schwingförderer (1) durch Vibration in Schwingung versetzbar ist, und eine Gleichrichtschaltung (14) umfasst, wobei bei einer Schwingung des Schwingelementes (13) eine Wechselspannung bereitgestellt wird, und wobei die Gleichrichtschaltung (14) zur Bereitstellung der Betriebsenergie durch Gleichrichten der Wechselspannung dient.

3. Sensoreinrichtung nach Anspruch 2, **dadurch gekennzeichnet, dass** das Schwingelement (13) ein Piezoelement (16, 20, 21) ist oder wenigstens ein Piezoelement (16, 20, 21) umfasst, wobei bei einer Schwingung des Schwingelements (13) das Piezoelement (16, 20, 21) verformt wird.

4. Sensoreinrichtung nach Anspruch 3, **dadurch gekennzeichnet, dass** das Piezoelement (16, 20, 21) eine in zumindest einer Richtung bezüglich der Sensoreinrichtung (8) bewegliche Gegenmasse (18, 22) mit einem bezüglich der Sensoreinrichtung (8) ortsfesten Befestigungspunkt koppelt.

5. Sensoreinrichtung nach einem der Ansprüche 2 bis 4, **dadurch gekennzeichnet, dass** das Schwingelement (13) ein Biegewandler ist.

6. Sensoreinrichtung nach Anspruch 2, **dadurch gekennzeichnet, dass** das Schwingelement einen Permanentmagneten umfasst, der bezüglich einer Spule beweglich gelagert ist, wobei die Wechselspannung bei einer Schwingung des Permanentmagneten an der Spule abfällt.

7. Sensoreinrichtung nach einem der vorangehenden Ansprüche, **dadurch gekennzeichnet, dass** die Energieversorgungseinrichtung (12) eine Empfangsantenne für die elektromagnetische Strahlung und eine Gleichrichtschaltung (14) zur Bereitstellung der Betriebsenergie aus einem Empfangssignal der Empfangsantenne umfasst.

8. Sensoreinrichtung nach einem der vorangehenden Ansprüche, **dadurch gekennzeichnet, dass** der Betriebsparameter eine Schwingung einer Schwingschiene (2) des Schwingförderers (1) betrifft.

9. Sensoreinrichtung nach einem der vorangehenden Ansprüche, **dadurch gekennzeichnet, dass** die Sensoreinrichtung (8) wenigstens eine Wandlereinrichtung zur analog-digital Wandlung des Messwerts oder des Betriebsparameters umfasst, wobei die Kommunikationseinrichtung (11) zur digitalen Übertragung des Betriebsparameters ausgebildet ist.

10. Schwingförderer, umfassend eine Schwingschiene (2), eine Antriebseinrichtung (5) zur Anregung einer Schwingung der Schwingschiene (2) und eine Steuereinrichtung (6) zur Steuerung der Antriebseinrichtung (5), **dadurch gekennzeichnet, dass** der Schwingförderer (1) eine Sensoreinrichtung (8) nach einem der vorangehenden Ansprüche umfasst, wobei die Steuereinrichtung (6) dazu dient, die Antriebseinrichtung (5) in Abhängigkeit des von der Sensoreinrichtung (8) drahtlos übertragenen Betriebsparameters zu steuern.

11. Schwingförderer nach Anspruch 10, **dadurch gekennzeichnet, dass** der Betriebsparameter eine Phase und/oder eine Amplitude und/oder eine Frequenz der Schwingung der Schwingschiene (2) betrifft, wobei die Sensoreinrichtung (8), die Steuereinrichtung (6) und die Antriebseinrichtung (5) einen Regelkreis zur Regelung der Phase und/oder der Amplitude und/oder der Frequenz der Schwingung auf einen vorgegebenen Wert bilden.

12. Schwingförderer nach Anspruch 10, **dadurch gekennzeichnet, dass** die Steuereinrichtung (6) dazu ausgebildet ist, den Betriebsparameter mit einer vorgegebenen Zeitverzögerung als Steuersignal für die Antriebseinrichtung (5) bereitzustellen.

13. Schwingförderer nach einem der Ansprüche 10 bis 12, **dadurch gekennzeichnet, dass** die Antriebseinrichtung (5) wenigstens eine Spule umfasst, wobei an der Schwingschiene (2) ein Anker (7) angeordnet ist, der bei Bestromung der Spule durch die Spule angezogen wird, wobei die Steuereinrichtung (6) zur Bestromung der Spule in Abhängigkeit des Betriebsparameters ausgebildet ist.

## Claims

1. Sensor device which is used to provide a control device (6) with at least one operating parameter of an oscillating conveyor (1), the control device (6) being used to control a drive device (5) for exciting oscillation of an oscillating rail (2) on the basis of the operating parameter, the sensor device (8) comprising at least one sensor element (9) for recording at least one measured value from which the operating parameter can be determined, and the sensor device (8) comprising at least one communication device (11) for wirelessly transmitting the operating parameter to the control device (6) and an energy supply device (12) for supplying the sensor device (8) with operating energy, the energy supply device (12) being used to convert a vibration generated by the drive device (5) and/or electromagnetic radiation into the operating energy, the sensor device (8) comprising a processing device (10) for determining the operating parameter from the measured value, the processing device (10) being designed to control the communication device (11) to transmit the respectively determined operating parameter at predefined intervals or at intervals dependent on the measured value, **characterized in that** the operating parameter describes a phase of an oscillation of the oscillating rail (2), and/or **in that** a temporal profile of the measured value for an interval of time determined from the measured values is transmitted as the operating parameter or a temporal profile of a value determined from the measured value for an interval of time determined from the measured values is transmitted as the operating parameter.

2. Sensor device according to Claim 1, **characterized in that** the energy supply device (12) comprises an oscillating element (13), which can be caused to oscillate by means of vibration in the event of mechanical contact between the sensor device (8) and the oscillating conveyor (1), and a rectifying circuit (14), an AC voltage being provided when the oscillating element (13) oscillates, and the rectifying circuit (14) being used to provide the operating energy by rectifying the AC voltage.

3. Sensor device according to Claim 2, **characterized in that** the oscillating element (13) is a piezoelectric element (16, 20, 21) or comprises at least one piezoelectric element (16, 20, 21), the piezoelectric element (16, 20, 21) being deformed when the oscillating element (13) oscillates.

4. Sensor device according to Claim 3, **characterized in that** the piezoelectric element (16, 20, 21) couples a counterweight (18, 22), which is movable in at least one direction with respect to the sensor device (8), to a fastening point which is stationary with respect to the sensor device (8).

5. Sensor device according to one of Claims 2 to 4, **characterized in that** the oscillating element (13) is a bending transducer.

6. Sensor device according to Claim 2, **characterized in that** the oscillating element comprises a permanent magnet which is movably mounted with respect to a coil, the AC voltage being dropped across the coil when the permanent magnet oscillates.

7. Sensor device according to one of the preceding claims, **characterized in that** the energy supply device (12) comprises a receiving antenna for the electromagnetic radiation and a rectifying circuit (14) for providing the operating energy from a reception signal from the receiving antenna.

8. Sensor device according to one of the preceding claims, **characterized in that** the operating parameter relates to an oscillation of an oscillating rail (2) of the oscillating conveyor (1).

9. Sensor device according to one of the preceding claims, **characterized in that** the sensor device (8) comprises at least one converter device for subjecting the measured value or the operating parameter to analogue/digital conversion, the communication device (11) being designed to digitally transmit the operating parameter.

10. Oscillating conveyor comprising an oscillating rail (2), a drive device (5) for exciting an oscillation of the oscillating rail (2) and a control device (6) for controlling the drive device (5), **characterized in that** the oscillating conveyor (1) comprises a sensor device (8) according to one of the preceding claims, the control device (6) being used to control the drive device (5) on the basis of the operating parameter wirelessly transmitted by the sensor device (8).

11. Oscillating conveyor according to Claim 10, **characterized in that** the operating parameter relates to a phase and/or an amplitude and/or a frequency of the oscillation of the oscillating rail (2), the sensor device (8), the control device (6) and the drive device (5) forming a control loop for regulating the phase and/or the amplitude and/or the frequency of the oscillation to a predefined value.

12. Oscillating conveyor according to Claim 10, **characterized in that** the control device (6) is designed to provide the operating parameter as a control signal for the drive device (5) with a predefined time delay.

13. Oscillating conveyor according to one of Claims 10 to 12, **characterized in that** the drive device (5) comprises at least one coil, an armature (7) being arranged on the oscillating rail (2), which armature is attracted by the coil when the coil is energized, the control device (6) being designed to energize the coil on the basis of the operating parameter.

## Revendications

1. Dispositif capteur, qui sert à fournir au moins un paramètre de fonctionnement d'un convoyeur oscillant (1) à un dispositif de commande (6), le dispositif de commande (6) servant à commander un dispositif d'entraînement (5) destiné à exciter l'oscillation d'un rail oscillant (2) en fonction du paramètre de fonctionnement, le dispositif capteur (8) comportant au moins un élément capteur (9) destiné à acquérir au moins une valeur mesurée à partir de laquelle peut être déterminé le paramètre de fonctionnement, et le dispositif capteur (8) comportant au moins un dispositif de communication (11) destiné à la transmission sans fil du paramètre de fonctionnement au dispositif de commande (6) et un dispositif d'alimentation en énergie (12) destiné à alimenter le dispositif capteur (8) en énergie de fonctionnement, le dispositif d'alimentation en énergie (12) servant à la conversion d'une vibration et/ou d'un rayonnement électromagnétique généré par le dispositif d'entraînement (5) en l'énergie de fonctionnement, le dispositif capteur (8) comportant un dispositif de traitement (10) destiné à déterminer le paramètre de fonctionnement à partir de la valeur mesurée, le dispositif de traitement (10) étant configuré pour commander le dispositif de communication (11) à des écarts prédéfinis ou dépendants de la valeur mesurée en vue de la transmission du paramètre de fonctionnement respectivement déterminé, **caractérisé en ce que** le paramètre de fonctionnement décrit une phase d'une oscillation du rail oscillant (2) et/ou **en ce que** le paramètre de fonctionnement transmis est un tracé dans le temps de la valeur mesurée pour un intervalle de temps déterminé à partir des valeurs mesurées ou le paramètre de fonctionnement transmis est un tracé dans le temps d'une valeur déterminée à partir de la valeur mesurée pour un intervalle de temps déterminé à partir des valeurs mesurées.

2. Dispositif capteur selon la revendication 1, **caractérisé en ce que** le dispositif d'alimentation en énergie (12) comporte un élément oscillant (13) qui, lors d'un contact mécanique du dispositif capteur (8) avec le convoyeur oscillant (1) peut être mis en oscillation par vibration, ainsi qu'un circuit de redressement (14), une tension alternative étant fournie lors d'une oscillation de l'élément oscillant (13) et le circuit de redressement (14) servant à la fourniture de l'énergie de fonctionnement par redressement de la tension alternative.

3. Dispositif capteur selon la revendication 2, **caractérisé en ce que** l'élément oscillant (13) est un élément piézoélectrique (16, 20, 21) ou comporte au moins un élément piézoélectrique (16, 20, 21), l'élément piézoélectrique (16, 20, 21) étant déformé lors d'une oscillation de l'élément oscillant (13).

4. Dispositif capteur selon la revendication 3, **caractérisé en ce que** l'élément piézoélectrique (16, 20, 21) accouple un contrepoids (18, 22), mobile dans au moins une direction par rapport au dispositif capteur (8), à un point de fixation en position fixe par rapport au dispositif capteur (8).

5. Dispositif capteur selon l'une des revendications 2 à 4, **caractérisé en ce que** l'élément oscillant (13) est un transducteur à flexion.

6. Dispositif capteur selon la revendication 2, **caractérisé en ce que** l'élément oscillant comporte un aimant permanent qui est monté mobile par rapport à une bobine, la tension alternative chutant aux bornes de la bobine lors d'une oscillation de l'aimant permanent.

7. Dispositif capteur selon l'une des revendications précédentes, **caractérisé en ce que** le dispositif d'alimentation en énergie (12) comporte une antenne de réception pour le rayonnement électromagnétique et un circuit de redressement (14) destiné à fournir l'énergie de fonctionnement à partir d'un signal reçu de l'antenne de réception.

8. Dispositif capteur selon l'une des revendications précédentes, **caractérisé en ce que** le paramètre de fonctionnement concerne une oscillation d'un rail oscillant (2) du convoyeur oscillant (1).

9. Dispositif capteur selon l'une des revendications précédentes, **caractérisé en ce que** le dispositif capteur (8) comporte au moins un dispositif convertisseur destiné à la conversion analogique-numérique de la valeur mesurée ou du paramètre de fonctionnement, le dispositif de communication (11) étant configuré pour la transmission numérique du paramètre de fonctionnement.

10. Convoyeur oscillant comprenant un rail oscillant (2), un dispositif d'entraînement (5) destiné à exciter une oscillation du rail oscillant (2) et un dispositif de commande (6) destiné à commander le dispositif d'entraînement (5), **caractérisé en ce que** le convoyeur oscillant (1) comporte un dispositif capteur (8) selon l'une des revendications précédentes, le dispositif de commande (6) servant à commander le dispositif d'entraînement (5) en fonction du paramètre de fonctionnement transmis sans fil par le dispositif capteur (8).

11. Convoyeur oscillant selon la revendication 10, **caractérisé en ce que** le paramètre de fonctionnement concerne une phase et/ou une amplitude et/ou une fréquence de l'oscillation du rail oscillant (2), le dispositif capteur (8), le dispositif de commande (6) et le dispositif d'entraînement (5) formant un circuit de régulation destiné à la régulation de la phase et/ou de l'amplitude et/ou de la fréquence de l'oscillation à une valeur prédéfinie.

12. Convoyeur oscillant selon la revendication 10, **caractérisé en ce que** le dispositif de commande (6) est configuré pour fournir le paramètre de fonctionnement avec un retard dans le temps prédéfini en tant que signal de commande pour le dispositif d'entraînement (5).

13. Convoyeur oscillant selon l'une des revendications 10 à 12, **caractérisé en ce que** le dispositif d'entraînement (5) comporte au moins une bobine, un induit (7) étant disposé sur le rail oscillant (2), lequel est attiré par la bobine lors de la mise sous tension de la bobine, le dispositif de commande (6) étant configuré pour alimenter électriquement la bobine en fonction du paramètre de fonctionnement.
